# EUROPEAN PATENT SPECIFICATION

(11) **EP 2 337 207 B1**
(45) Date of publication and mention of the grant of the patent: **06.03.2019**
(21) Application number: 10195104.4
(22) Date of filing: 15.12.2010
(51) Int. Cl.: H02M 3/158

(54) **STEP-UP AND STEP-DOWN DC-DC CONVERTER**
AUFWÄRTS- UND ABWÄRTS-GLEICHSPANNUNGSWANDLER
CONVERTISSEUR CC-CC PAR ÉLÉVATION ET ABAISSEMENT

(30) Priority: 16.12.2009 JP 2009285259
(43) Date of publication of application: 22.06.2011
(73) Proprietor: Koito Manufacturing Co., Ltd., Tokyo 108-8711 (JP)
(72) Inventor: Shiotsu, Fuminori, Shizuoka (JP)
(74) Representative: Hoffmann Eitle

(56) References cited:
- DE-A1-102008 025 748
- JP-A- 2009 038 218
- US-A1- 2005 068 459

## Description

### [Technical Field]

The present invention relates to a step-up and step-down DC-DC converter that steps up or steps down an input direct-current voltage to convert the input direct-current voltage to a predetermined output voltage.

### [Related Art]

Conventionally, a chopper-type DC-DC converter is used as a DC-DC converter of an electronic device, or the like. The chopper-type DC-DC converter is able to hold an output voltage within a given range even when an input voltage fluctuates.

There is, for example, proposed a DC-DC converter of this type in which a step-down chopper transistor and a step-up chopper transistor are connected via a common choke coil, the step-up chopper transistor is turned off and the step-down chopper transistor is subjected to on-off control to thereby step down the input voltage when the input voltage is higher than the output voltage, and the step-down chopper transistor is turned on and the step-up chopper transistor is subjected to on-off control to thereby step up the input voltage when the input voltage is lower than the output voltage (see Patent Document 1).

In the DC-DC converter, the step-down chopper-type DC-DC converter and the step-up chopper-type DC-DC converter are formed of the same circuit.

US 2005/0068459 A1 discloses a voltage adapter for a battery-powered camera including a boost regulating circuit. A constant boosted voltage is supplied to the appliance as the battery discharges.

JP 2009-038218 A discloses a LED drive circuit for protecting a LED against overheating.

[Patent Document 1]
Japanese Patent Application Laid-Open (Kokai) No. 62-18970

### [Disclosure of the Invention]

### [Problem to be Solved by the Invention]

In the above described related art, the step-down chopper transistor and the step-up chopper transistor are selectively operated on the basis of the input voltage. However, the operation of the step-down chopper transistor and the operation of the step-up chopper transistor are not smoothly switched at the time of switching between a step-down in voltage and a step-up in voltage, so the output voltage cannot be held constant.

That is, a transistor used as the step-down chopper transistor or the step-up chopper transistor has a delay time when it turns on and when it turns off. Therefore, even when the step-down chopper transistor or the step-up chopper transistor is selectively operated on the basis of the input voltage at the time of switching between a step-down in voltage and a step-up in voltage, there is a possibility that the step-down chopper transistor maintains an on state and the step-up chopper transistor maintains an off state. For this reason, it is impossible to output the output current held constant against fluctuations in the input voltage at the time of switching between a step-down in voltage and a step-up in voltage.

Then, it is an object of the present invention to execute control so that the output current is held constant against fluctuations in the input voltage.

### [Means for Solving the Problem]

The invention provides a step-up and a step-down DC-DC converter according to claim 1. Preferred embodiments are defined in the dependent claims.

A step-up and step-down DC-DC converter according to an aspect of the present invention includes: a step-down unit that has a step-down switch inputting a direct-current voltage from a direct-current power supply and a choke coil connected to the step-down switch, and that outputs an output voltage lower than the input voltage to a light source; a step-up unit that has a step-up switch connected to the step-down switch via the choke coil, and that outputs an output voltage higher than the input voltage to the light source; a constant-current clamping circuit that limits a light source driving current flowing through the light source to a constant value; and a control unit that controls the step-down switch, the step-up switch and the constant-current clamping circuit on the basis of the light source driving current.

Limiting operation of the constant-current clamping circuit is carried out so as to limit the light source driving current flowing through the light source to a constant value.

### [Effects of the Invention]

The step-up and step-down DC-DC converter according to the present invention is characterized by including: a step-down unit that has a step-down switch inputting a direct-current voltage from a direct-current power supply and a choke coil connected to the step-down switch, and that outputs an output voltage lower than the input voltage to a light source; a step-up unit that has a step-up switch connected to the step-down switch via the choke coil, and that outputs an output voltage higher than the input voltage to the light source; a constant-current clamping circuit that limits a light source driving current flowing through the light source to a constant value; and a control unit that controls the step-down switch, the step-up switch and the constant-current clamping circuit on the basis of the light source driving current.

Because the constant-current clamping circuit is controlled so as to limit the light source driving current to a constant value, it is possible to hold the output current (light source driving current) constant against fluctuations in the input voltage.

The invention is characterized in that: the control unit includes a mode switching control unit that switches a mode to any one of a step-down mode in which the step-down switch is subjected to switching and the step-up switch maintains an off state, a conductive mode in which the step-down switch maintains an on state and the step-up switch maintains an off state and a step-up mode in which the step-down switch maintains an on state and the step-up switch is subjected to switching, wherein a maximum value of an on-duty of the step-down switch and a minimum value of an on-duty of the step-up switch are preset in the control unit, the constant-current clamping circuit starts limiting operation that controls the light source driving current to a constant value when the on-duty of the step-down switch becomes the maximum value in the step-down mode or when the on-duty of the step-up switch becomes the minimum value in the step-up mode, and the constant-current clamping circuit stops the limiting operation when the on-duty of the step-down switch becomes smaller than the maximum value in the step-down mode or when the on-duty of the step-up switch becomes larger than the minimum value in the step-up mode.

Thus, even when the input voltage is close to the output voltage, by being switched to the conductive mode or the step-up mode in which the operation of the constant-current clamping circuit starts, it is possible to execute control so as to hold the output current (light source driving current) constant against fluctuations in the input voltage.

The invention recited in claim 2 is characterized in that: when a voltage applied to the constant-current clamping circuit becomes higher than or equal to a predetermined threshold, the mode switching control unit switches the mode to the conductive mode when the step-up mode is set and switches the mode to the step-down mode when the conductive mode is set, and, when the light source driving current flowing through the light source becomes smaller than a predetermined threshold, the mode switching control unit switches the mode to the conductive mode when the step-down mode is set and switches the mode to the step-up mode when the conductive mode is set.

Thus, even when the input voltage and the output voltage are any values (whichever is higher or lower, and even when the input voltage value is close to the output voltage value), it is possible to reliably execute control so as to hold the output current (light source driving current) constant against fluctuations in the input voltage.

The invention recited in claim 3 is characterized in that: dimming the light source is performed in pulse width modulation to repeatedly perform and stop switching operation of the step-down switch and the step-up switch, and the operation of the constant-current clamping circuit is stopped to interrupt the light source driving current when the step-down switch and the step-up switch are stopped.

Thus, it is possible to bring the rising and falling of the light source driving current, flowing through the light source that is subjected to dimming with pulse width modulation, to coincide with the rising and falling of a dimming signal, so it is possible to improve linearity (trackability) of dimming with pulse width modulation.

The invention recited in claim 4 is characterized in that: the step-up and step-down DC-DC converter is installed in a vehicular lamp, a semiconductor light source is used as the light source, and the light source driving current is supplied to the semiconductor light source.

Thus, because an object to which the light source driving current is supplied is the semiconductor light source of the vehicular lamp, the light source driving current supplied to the semiconductor light source of the vehicular lamp may be held constant, and it is possible to prevent flicker when the semiconductor light source emits light.

### [Best Mode for Carrying Out the Invention]

Hereafter, an embodiment of a step-up and step-down DC-DC converter according to the present invention will be described. A step-up and step-down DC-DC converter is, for example, used in a driving current/voltage control circuit, or the like, for driving a light source that constitutes a vehicular lamp. A light-emitting diode (semiconductor light source) is used as the light source.

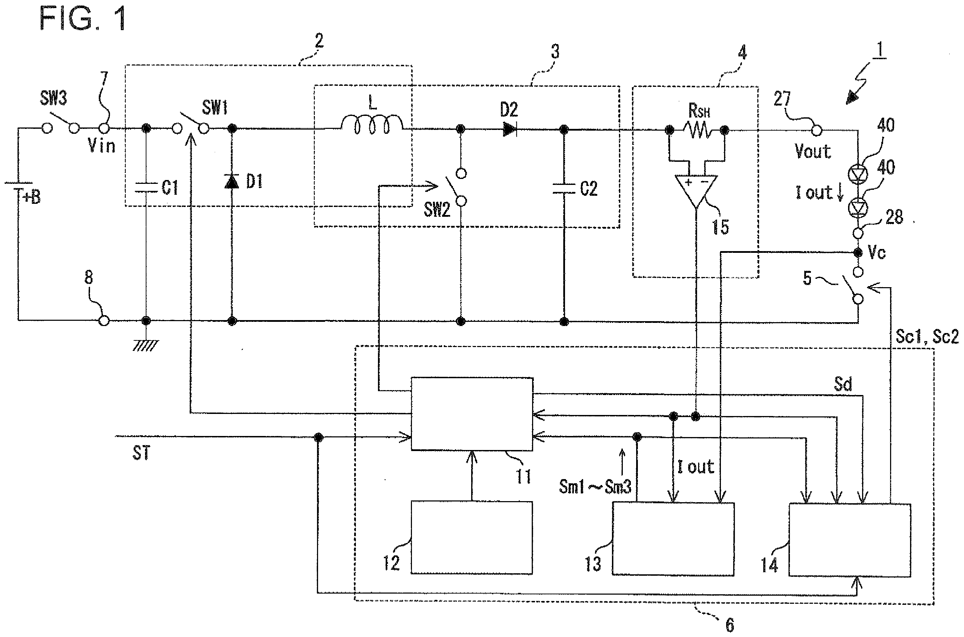

As shown in FIG. 1, the step-up and step-down DC-DC converter 1 includes a step-down unit 2 that outputs an output voltage Vout lower than an input voltage Vin, a step-up unit 3 that outputs the output voltage Vout higher than the input voltage Vin, a current detecting unit 4, a constant-current clamping switch 5 that serves as a constant-current clamping circuit, and a control unit 6 that controls the step-down unit 2, the step-up unit 3 and the constant-current clamping switch 5. The step-up and step-down DC-DC converter 1 functions as current supply means for supplying driving current to LEDs (light emitting diodes) 40, 40 serving as semiconductor light sources.

The step-down unit 2 includes a step-down switch SW1, a capacitor C1, a diode D1 and a choke coil (inductor) L. The step-down switch SW1 is formed of a switching element, such as an NMOS transistor (not shown). In this case, the drain is connected to an input terminal 7, the source is grounded via the diode D1 and is connected to one end of the choke coil L, and the gate is connected to the control unit 6. One end of the capacitor C1 is connected to the input terminal 7, and the other end of the capacitor C1 is grounded and is connected to an input terminal 8.

The input terminal 7 is connected to a plus terminal of an in-vehicle battery (+B) that is a direct-current power supply via a power switch SW3, and the input terminal 8 is connected to a minus terminal of the in-vehicle battery,

The step-down switch SW1 receives a step-down switch driving signal (on-off signal) from the control unit 6 to turn on or off (perform switching).

The step-up unit 3 includes the choke coil L shared with the step-down unit 2, and includes a step-up switch SW2, a capacitor C2 and a diode D2. The step-up switch SW2 is formed of a switching element, such as an NMOS transistor (not shown). In this case, the drain is connected to the other end of the choke coil L and is connected to an output terminal 27 via the diode D2 and a shunt resistor R_{SH}, the source is grounded, and the gate is connected to the control unit 6. On end of the capacitor C2 is connected to the diode D2, and the other end of the capacitor C2 is grounded and is connected to the constant-current clamping switch 5.

The output terminal 27 is connected to the LEDs 40, 40.

The step-up switch SW2 receives a step-up switch driving signal (on-off signal) from the control unit 6 to turn on or off (perform switching).

The current detecting unit 4 includes the shunt resistor R_{SH} and a current detector amplifier 15, and detects a light source driving current lout. One end of the shunt resistor R_{SH} is connected to the diode D2, and the other end of the shunt resistor R_{SH} is connected to the anode of the LEDs 40, 40 via the output terminal 27.

The constant-current clamping switch 5 is connected to the cathode side of the LEDs 40, 40, and has a function of dropping a redundant voltage Vc of a voltage applied to the LEDs 40, 40 so as to maintain the light source driving current lout flowing through the LEDs 40, 40 at a constant current. The constant-current clamping switch 5 is, for example, formed of an FET, and the drain-to-source voltage (V_{ds}) of the FET is controlled in an analog manner to limit the current flowing through the light source (light source driving current) to a constant value.

The control unit 6 includes a PWM (pulse width modulation) control circuit 11, a comparison wave generating circuit 12, a mode switching circuit 13 that serves as a mode switching control unit, and a constant-current clamping control circuit 14.

The input side of the PWM control circuit 11 is connected to the comparison wave generating circuit 12, the mode switching circuit 13 and the current detector amplifier 15. The output side of the PWM control circuit 11 is connected to the step-down switch SW1 and the step-up switch SW2.

The comparison wave generating circuit 12 generates, for example, a triangular wave as a comparison wave and transmits the triangular wave to the PWM control circuit 11. Note that the triangular wave is desirably configured so that a period of time from peak to valley and a period of time from valley to peak in one period are equal to each other; however, the triangular wave is not limited to this configuration.

The input side of the mode switching circuit 13 is connected to one end of the current detector amplifier 15 and one end of the constant-current clamping switch 5, and the output side of the mode switching circuit 13 is connected to the PWM control circuit 11 and the constant-current clamping control circuit 14. The mode switching circuit 13 transmits a step-down mode signal Sm1 for switching to a step-down mode, a conductive mode signal Sm2 for switching to a conductive mode, and a step-up mode signal Sm3 for switching to a step-up mode to the PWM control circuit 11 and the constant-current clamping control circuit 14. In the step-down mode, the step-up switch SW2 is maintained in an off state, and the step-down switch SW1 is subjected to switching. In the conductive mode, the step-up switch SW2 is maintained in an off state, and the step-down switch SW1 is maintained in an on state. In the step-up mode, the step-down switch SW1 is maintained in an on state, and the step-up switch SW2 is subjected to switching.

The input side of the constant-current clamping control circuit 14 is connected to the PWM control circuit 11, the mode switching circuit 13 and the current detector amplifier 15, and the output side of the constant-current clamping control circuit 14 is connected to the constant-current clamping switch 5. In addition, the constant-current clamping control circuit 14 monitors a switch driving unit (not shown) of the PWM control circuit 11, and detects the on-duty of the step-down switch SW1 and the on-duty of the step-up switch SW2.

The maximum value of the on-duty of the step-down switch SW1 and the minimum value of the on-duty of the step-up switch SW2 are prestored in a memory included in the constant-current clamping control circuit 14. The maximum value and the minimum value are start condition and stop condition of limiting operation (discussed later) of the constant-current clamping switch 5.

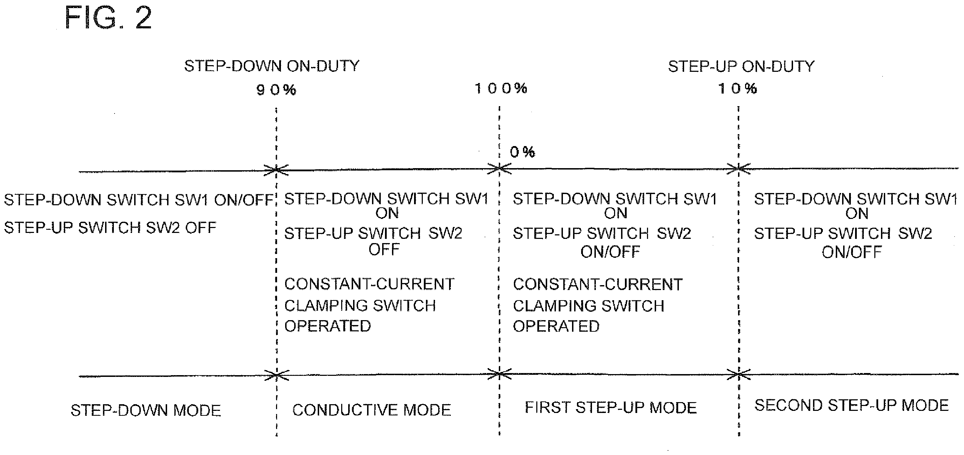

Hereafter, the operation of the step-up and step-down DC-DC converter 1 will be described separately in six pattern mode switching controls. Note that FIG. 2 shows details of control of the PWM control circuit 11 (control of the step-down switch SW1 and the step-up switch SW2) in the step-down mode, the conductive mode and the step-up mode (first step-up mode and the second step-up mode) and details of control of the constant-current clamping control circuit 14 (control of operation start of the constant-current clamping switch).

The six pattern mode switching controls include a control for switching from the step-down mode to the conductive mode (hereafter, referred to as "step-down-to-conductive mode control"), a control for switching from the conductive mode to the first step-up mode (hereafter, referred to as "conductive-to-first step-up mode control"), a control for switching from the first step-up mode to the second step-up mode (hereafter, referred to as "first step-up-to-second step-up mode control"), a control for switching from the second step-up mode to the first step-up mode (hereafter, referred to as "second step-up-to-first step-up mode control"), a control for switching from the first step-up mode control to the conductive mode control (hereafter, referred to as "first step-up-to-conductive mode control") and a control for switching from the conductive mode control to the step-down mode control (hereafter, referred to as "conductive-to-step-down mode control").

Note that the input voltage Vin gradually decreases from the step-down mode to the second step-up mode, and the input voltage Vin gradually increases from the second step-up mode to the step-down mode.

In addition, as described above, the step-up mode includes the first step-up mode and the second step-up mode. In the first step-up mode, the step-down switch SW1 is maintained in an on state, the step-up switch SW2 is subjected to switching in a state where the on-duty is fixed to 10%, and the limiting operation of the constant-current clamping switch 5 is carried out. In the second step-up mode, the step-down switch SW1 is maintained in an on state, the step-up switch SW2 is subjected to switching at a value larger than on-duty 10%, and the limiting operation of the constant-current clamping switch 5 is stopped.

First, the step-down-to-conductive mode control will be described.

As the power switch SW3 turns on, the step-down mode signal Sm1 is transmitted from the mode switching circuit 13 to the PWM control circuit 11 and the constant-current clamping control circuit 14.

As the PWM control circuit 11 receives the step-down mode signal Sm1, the PWM control circuit 11 controls the step-down switch SW1 and the step-up switch SW2 so that the step-down switch SW1 is subjected to switching and the step-up switch SW2 is maintained in an off state (see FIG. 2).

After that, as the input voltage Vin decreases, the on-duty of the step-down switch SW1 increases. As the on-duty of the step-down switch SW1 becomes 90% (the maximum value of the on-duty of the step-down switch SW1), the step-down switch SW1 cannot be subjected to switching due to its characteristic, so a required output voltage Vout is not output and the light source driving current lout reduces.

The mode switching circuit 13 compares the light source driving current lout with a predetermined light source driving current (hereafter, referred to as "threshold current") Ith, and transmits the conductive mode signal Sm2 to the PWM control circuit 11 and the constant-current clamping control circuit 14 when the light source driving current lout becomes smaller than the threshold current Ith. Note that the threshold current Ith is predetermined to a value smaller than the light source driving current lout that is targeted in constant-current control over the LEDs 40, 40.

When the current mode is recognized as the step-down mode in the mode switching circuit 13 and the light source driving current lout becomes smaller than the threshold current Ith, the step-down mode is switched to the conductive mode.

As the PWM control circuit 11 receives the conductive mode signal Sm2, the PWM control circuit 11 controls the step-down switch SW1 and the step-up switch SW2 so that the step-down switch SW1 is maintained in an on state and the step-up switch SW2 is maintained in an off state (see FIG. 2).

Immediately after the on-duty of the step-down switch SW1 becomes 90% and the mode is switched to the conductive mode, the output voltage Vout becomes a voltage corresponding to the on-duty 100% of the step-down switch SW1 to increase the light source driving current lout, so a voltage (Vf+Vc) higher than or equal to a forward voltage (Vf) is applied to the LEDs 40, 40. In order to control the light source driving current lout flowing through the LEDs 40, 40 to a constant value, it is necessary to drop a redundant voltage Vc. Note that the voltage Vc is a voltage applied to the constant-current clamping switch 5.

Thus, as the constant-current clamping control circuit 14 detects the on-duty of the step-down switch SW1 and confirms that the on-duty is 90%, the constant-current clamping control circuit 14 transmits a control signal Sc1 for starting limiting operation to the constant-current clamping switch 5. As the constant-current clamping switch 5 receives the control signal Sc1, the constant-current clamping switch 5 starts the limiting operation to drop the voltage Vc (see FIG. 2). Thus, only the constant forward voltage Vf is applied to the LEDs 40, 40 to thereby make it possible to hold the light source driving current lout constant.

Next, the conductive-to-first step-up mode control will be described.

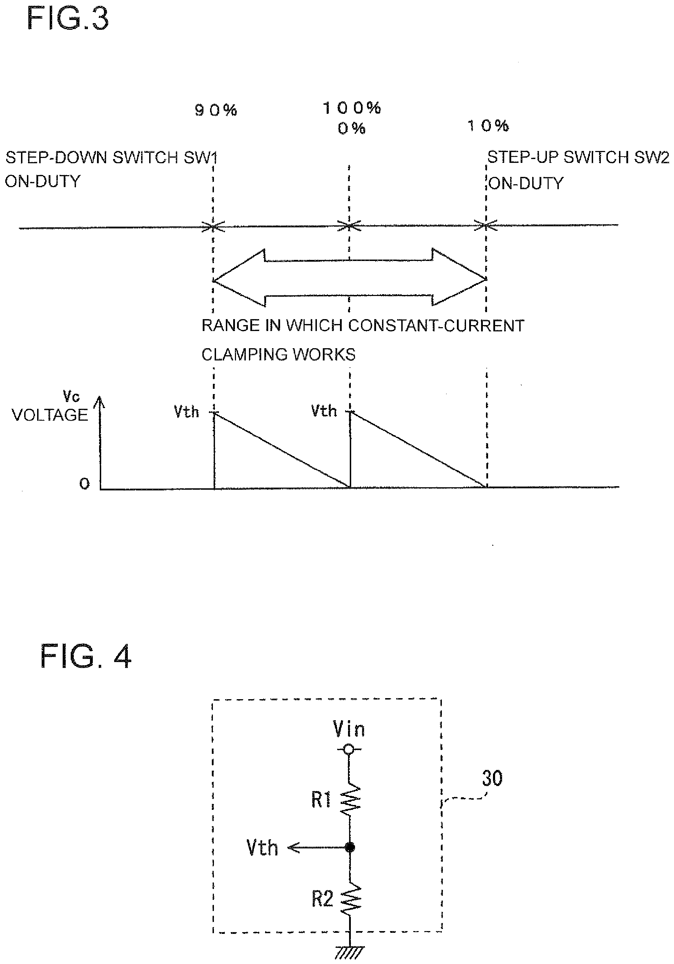

In the conductive mode, the voltage Vc applied to the constant-current clamping switch 5 gradually decreases with a decrease in the input voltage Vin (see FIG. 3). The light source driving current lout that has increased immediately after being switched to the conductive mode reduces with a decrease in the input voltage Vin. As the input voltage Vin becomes lower than the output voltage Vout, the required output voltage Vout is not output, so the light source driving current lout reduces.

The mode switching circuit 13 compares the light source driving current lout with the threshold current Ith, and, when the light source driving current lout becomes smaller than the threshold current Ith, the mode switching circuit 13 transmits the step-up mode signal Sm3 to the PWM control circuit 11 and the constant-current clamping control circuit 14.

When the current mode is recognized as the conductive mode in the mode switching circuit 13 and the light source driving current lout becomes smaller than the threshold current Ith, the conductive mode is switched to the first step-up mode.

As the PWM control circuit 11 receives the step-up mode signal Sm3, the PWM control circuit 11 controls the step-down switch SW1 and the step-up switch SW2 so that the step-down switch SW1 is maintained in an on state and the step-up switch SW2 is subjected to switching (see FIG. 2).

Immediately after being switched to the first step-up mode, the output voltage Vout becomes a voltage corresponding to the on-duty 10% of the step-up switch SW2 to increase the light source driving current lout, so the voltage (Vf+Vc) higher than or equal to the forward voltage (Vf) is applied to the LEDs 40, 40. In order to control the light source driving current lout flowing through the LEDs 40, 40 to a constant value, it is necessary to drop a redundant voltage Vc.

Then, even when the conductive mode is switched to the first step-up mode, the constant-current clamping control circuit 14 continues to transmit the control signal Sc1 for starting the limiting operation, so the constant-current clamping switch 5 continues the limiting operation to drop the voltage Vc (see FIG. 2). Thus, only the constant forward voltage Vf is applied to the LEDs 40, 40 to thereby make it possible to hold the light source driving current lout constant.

Next, the first step-up-to-second step-up mode control will be described.

In the first step-up mode, the voltage Vc applied to the constant-current clamping switch 5 gradually decreases with a reduction in the input voltage Vin (see FIG. 3).

As the constant-current clamping control circuit 14 detects the on-duty of the step-up switch SW2 and confirms that the on-duty becomes higher than 10%, the constant-current clamping control circuit 14 transmits the control signal Sc2 for stopping the limiting operation to the constant-current clamping switch 5. As the constant-current clamping switch 5 receives the control signal Sc2, the constant-current clamping switch 5 stops the limiting operation. As the constant-current clamping switch 5 stops the limiting operation, the first step-up mode is switched to the second step-up mode.

In switching from the first step-up mode to the second step-up mode, no mode switching signal is transmitted from the mode switching circuit 13 to the PWM control circuit 11. Thus, in the second step-up mode, as in the case of the first step-up mode, the step-down switch SW1 and the step-up switch SW2 are controlled so the step-down switch SW1 is maintained in an on state and the step-up switch SW2 is subjected to switching (see FIG. 2).

Next, the second step-up-to-first step-up mode control will be described.

In the second step-up mode, with an increase in the input voltage Vin, the on-duty of the step-up switch SW2 decreases.

As the constant-current clamping control circuit 14 detects the on-duty of the step-up switch SW2 and confirms that the on-duty is 10%, the constant-current clamping control circuit 14 transmits the control signal Sc1 for starting the limiting operation to the constant-current clamping switch 5. As the constant-current clamping switch 5 receives the control signal Sc1, the constant-current clamping switch 5 starts the limiting operation. As the constant-current clamping switch 5 starts the limiting operation, the second step-up mode is switched to the first step-up mode.

In switching from the second step-up mode to the first step-up mode, no mode switching signal is transmitted from the mode switching circuit 13 to the PWM control circuit 11. Thus, in the first step-up mode, as in the case of the second step-up mode, the step-down switch SW1 and the step-up switch SW2 are controlled so that the step-down switch SW1 is maintained in an on state and the step-up switch SW2 is subjected to switching (see FIG. 2).

When being switched to the first step-up mode, because it is fixed to a voltage corresponding to the on-duty 10% of the step-up switch SW2, the voltage (Vf+Vc) higher than or equal to the forward voltage (Vf) is applied to the LEDs 40, 40. In order to control the light source driving current lout flowing through the LEDs 40, 40 to a constant value, it is necessary to drop a redundant voltage Vc.

As described above, when being switched to the first step-up mode, the constant-current clamping switch 5 starts the limiting operation (see FIG. 2), so the redundant voltage Vc is dropped. Thus, only the constant forward voltage Vf is applied to the LEDs 40, 40, so the light source driving current lout may be held constant.

Note that, in the first step-up mode, the on-duty of the step-up switch SW2 is fixed to 10%, so the voltage Vc applied to the constant-current clamping switch 5 gradually increases with an increase in the input voltage Vin (see FIG. 3).

Next, the first step-up-to-conductive mode control will be described.

In the first step-up mode, the mode switching circuit 13 compares the voltage Vc with the threshold voltage Vth, and, when the voltage Vc becomes higher than or equal to the predetermined threshold Vth, the mode switching circuit 13 transmits the conductive mode signal Sm2 to the PWM control circuit 11 and the constant-current clamping control circuit 14.

The threshold voltage Vth is predetermined by a threshold voltage setting circuit 30 (see FIG. 4). The threshold voltage setting circuit 30 is provided in the constant-current clamping circuit 14, and outputs a voltage divided from the input voltage Vin by a resistor R1 and a resistor R2 as the threshold voltage Vth. The threshold voltage Vth used in the first step-up-to-conductive mode control is set on the basis of the input voltage Vin at the time when the step-up on-duty is 10%.

When the current mode is recognized as the first step-up mode in the mode switching circuit 13 and the voltage Vc becomes higher than or equal to the predetermined threshold voltage Vth, the first step-up mode is switched to the conductive mode.

As the PWM control circuit 11 receives the conductive mode signal Sm2, the step-down switch SW1 and the step-up switch SW2 are controlled so that the step-down switch SW1 is maintained in an on state and the step-up switch SW2 is maintained in an off state (see FIG. 2).

As the constant-current clamping control circuit 14 detects the on-duty of the step-up switch SW2 and confirms that the on-duty is 10%, the constant-current clamping control circuit 14 transmits the control signal Sc1 for starting the limiting operation to the constant-current clamping switch 5.

When being switched to the conductive mode, the output voltage Vout becomes a voltage corresponding to the on-duty 100% of the step-down switch SW1, so the voltage (Vc) that is a difference from the required output voltage Vout gradually increases. Therefore, the voltage Vc applied to the constant-current clamping switch 5 gradually increases with an increase in the input voltage Vin (see FIG. 3). The voltage (Vf+Vc) higher than or equal to the forward voltage (Vf) is applied to the LEDs 40, 40. In order to control the light source driving current lout flowing through the LEDs 40, 40 to a constant value, it is necessary to drop a redundant voltage Vc.

Then, even when the first step-up mode is switched to the conductive mode, the constant-current clamping control circuit 14 continues to transmit the control signal Sc1 for starting the limiting operation, so the constant-current clamping switch 5 continues the limiting operation to drop the voltage Vc (see FIG. 2). Thus, only the constant forward voltage Vf is applied to the LEDs 40, 40 to thereby make it possible to hold the light source driving current lout constant.

Next, the conductive-to-step-down mode control will be described.

In the conductive mode, the mode switching circuit 13 compares the voltage Vc with the threshold voltage Vth, and, when the voltage Vc becomes higher than or equal to the predetermined threshold voltage Vth, the mode switching circuit 13 transmits the step-down mode signal Sm1 to the PWM control circuit 11 and the constant-current clamping control circuit 14. Note that the threshold voltage Vth used in the conductive-to-step-down mode control is set on the basis of the input voltage Vin at the time when the step-down on-duty is 90%.

As the PWM control circuit 11 receives the step-down mode signal Sm1, the step-down switch SW1 and the step-up switch SW2 are controlled so that the step-up switch SW2 is maintained in an off state and the step-down switch SW1 is subjected to switching (see FIG. 2).

When the current mode is recognized as the conductive mode in the mode switching circuit 13 and the voltage Vc becomes higher than or equal to the predetermined threshold voltage Vth, the conductive mode is switched to the step-down mode.

As the constant-current clamping control circuit 14 confirms that the on-duty of the step-down switch SW1 becomes lower than 90%, the constant-current clamping control circuit 14 transmits the control signal Sc2 for stopping the limiting operation to the constant-current clamping switch 5. As the constant-current clamping switch 5 receives the control signal Sc2, the constant-current clamping switch 5 stops the limiting operation.

Thus, even when the input voltage Vin is close to the output voltage Vout, by being switched to the conductive mode or the step-up mode (first step-up mode) in which the operation of the constant-current clamping switch 5 starts, it is possible to hold the output current (light source driving current lout) constant against fluctuations in the input voltage Vin during switching from the step-down mode via the conductive mode to the step-up mode.

In addition, because the light source driving current lout supplied to the LEDs 40, 40 of the vehicular lamp may be held constant, it is possible to prevent flicker of the LEDs 40, 40.

Note that, in the above described embodiment, the step-down switch SW1 and the step-up switch SW2 are controlled by the PWM control circuit 11; instead, when the step-down switch SW1 and the step-up switch SW2 are controlled by PFM (pulse frequency modulation) control as well, the same effects may be obtained.

Next, the operation of the step-up and step-down DC-DC converter 1 in the case where the LEDs 40, 40 are subjected to dimming with pulse width modulation (hereafter, referred to as "PWM dimming") will be described.

In order to carry out PWM dimming, it is necessary to repeatedly perform and stop switching operation (for example, switching operation of the step-down switch SW1 in the step-down mode) of the step-down switch SW1 and the step-up switch SW2.

First, a PWM dimming signal St (on-off signal) is transmitted to the PWM control circuit 11 and the constant-current clamping control circuit 14.

The PWM control circuit 11 carries out switching operation of the step-down switch SW1 and step-up switch SW2 when the PWM dimming signal St is at a high level, and stops switching operation of the step-down switch SW1 and step-up switch SW2 when the PWM dimming signal St is at a low level.

The constant-current clamping control circuit 14 transmits the control signal Sc1 for starting the limiting operation to the constant-current clamping switch 5 when the PWM dimming signal St is at a high level, and transmits the control signal Sc2 for stopping the limiting operation to the constant-current clamping switch 5 when the PWM dimming signal St is at a low level.

When the switching operation of the step-down switch SW1 and step-up switch SW2 is being carried out, the operation of the constant-current clamping switch 5 starts, and the light source driving current lout flows. When the switching operation of the step-down switch SW1 and step-up switch SW2 is stopped, the operation of the constant-current clamping switch 5 stops, and the light source driving current lout is interrupted.

That is, when the switching operation of the step-down switch SW1 and step-up switch SW2 is stopped, the output voltage Vout (electric charge) is held in the capacitor C2; when the switching operation of the step-down switch SW1 and step-up switch SW2 is being carried out, the electric charge held in the capacitor C2 is released.

Thus, it is possible to bring the rising and falling of the light source driving current lout, flowing through the LEDs 40, 40 that is subjected to PWM dimming, to coincide with the rising and falling of the PWM dimming signal St, so it is possible to improve linearity (trackability) of PWM dimming.

### [BRIEF DESCRIPTION OF THE DRAWINGS]

FIG. 1 is a view that shows the configuration of a DC-DC converter according to an embodiment of the invention.
FIG. 2 is a view for illustrating the operations of a step-down switch, a step-up switch and a constant-current clamping switch in a step-down mode, a conductive mode, a first step-up mode or a second step-up mode.
FIG. 3 is a view that shows a voltage applied to a constant-current clamping switch in the conductive mode and the first step-up mode.
FIG. 4 is a view that shows the configuration of a threshold voltage setting circuit.

### [Description of the Reference Numerals]

- 1: STEP-UP AND STEP-DOWN DC-DC CONVERTER
- 2: STEP-DOWN UNIT
- 3: STEP-UP UNIT
- 5: CONSTANT-CURRENT CLAMPING SWITCH
- 6: CONTROL UNIT

## Claims

1. A step-up and step-down DC-DC converter (1) comprising:
a step-down unit (2) that has a step-down switch (SW1) inputting a direct-current voltage from a direct-current power supply and a choke coil (L) connected to the step-down switch (SW1), and that outputs an output voltage lower than the input voltage to a light source (40);
a step-up unit (3) that has a step-up switch (SW2) connected to the step-down switch (SW1) via the choke coil (L), and that outputs an output voltage higher than the input voltage to the light source (40);
a constant-current clamping circuit (5) that limits a light source driving current flowing through the light source (40) to a constant value; and
a control unit (6) that controls the step-down switch (SW1), the step-up switch (SW2) and the constant-current clamping circuit (5) on the basis of the light source driving current,
**characterized in that**:
the control unit (6) includes a mode switching control unit (13) that switches a mode to any one of a step-down mode in which the step-down switch (SW1) is subjected to switching and the step-up switch (SW2) maintains an off state, a conductive mode in which the step-down switch (SW1) maintains an on state and the step-up switch (SW2) maintains an off state and a step-up mode in which the step-down switch (SW1) maintains an on state and the step-up switch (SW2) is subjected to switching, wherein
a maximum value of an on-duty of the step-down switch (SW1) and a minimum value of an on-duty of the step-up switch (SW2) are preset in the control unit (6),
the constant-current clamping circuit (5) starts limiting operation that controls the light source driving current to a constant value when the on-duty of the step-down switch (SW1) becomes the maximum value in the step-down mode or when the on-duty of the step-up switch (SW2) becomes the minimum value in the step-up mode, and
the constant-current clamping circuit (5) stops the limiting operation when the on-duty of the step-down switch (SW1) becomes smaller than the maximum value in the step-down mode or when the on-duty of the step-up switch (SW2) becomes larger than the minimum value in the step-up mode.

2. The step-up and step-down DC-DC converter (1) according to claim 1, **characterized in that**
when a voltage applied to the constant-current clamping circuit (5) becomes higher than or equal to a predetermined threshold, the mode switching control unit (13) switches the mode to the conductive mode when the step-up mode is set and switches the mode to the step-down mode when the conductive mode is set, and
when the light source driving current flowing through the light source (40) becomes smaller than a predetermined threshold, the mode switching control unit (13) switches the mode to the conductive mode when the step-down mode is set and switches the mode to the step-up mode when the conductive mode is set.

3. The step-up and step-down DC-DC converter (1) according to claim 1 or 2, **characterized in that**
dimming the light source (40) is performed in pulse width modulation to repeatedly perform and stop switching operation of the step-down switch (SW1) and the step-up switch (SW2), and
the operation of the constant-current clamping circuit (5) is stopped to interrupt the light source driving current when the step-down switch (SW1) and the step-up switch (SW2) are stopped.

4. The step-up and step-down DC-DC converter (1) according to claim 1, 2 or 3, **characterized in that**
the step-up and step-down DC-DC converter (1) is installed in a vehicular lamp, a semiconductor light source is used as the light source, and the light source driving current is supplied to the semiconductor light source (40).

## Patentansprüche

1. Aufwärts/Abwärts-DC/DC-Wandler (1), umfassend:
eine Abwärtseinheit (2), die einen Abwärtsschalter (SW1), der eine Gleichspannung von einer Gleichstromquelle und einer mit dem Abwärtsschalter (SW1) verbundenen Drosselspule (L) eingibt, aufweist und die eine Ausgangsspannung, die niedriger als die Eingangsspannung ist, an eine Lichtquelle (40) ausgibt;
eine Aufwärtseinheit (3), die einen Aufwärtsschalter (SW2), der über die Drosselspule (L) mit dem Abwärtsschalter (SW1) verbunden ist, aufweist und die eine Ausgangsspannung, die höher als die Eingangsspannung ist, an die Lichtquelle (40) ausgibt;
eine Konstantstrom-Klemmschaltung (5), die einen durch die Lichtquelle (40) fließenden Lichtquellen-Antriebsstrom auf einen konstanten Wert begrenzt; und
eine Steuereinheit (6), die den Abwärtsschalter (SW1), den Aufwärtsschalter (SW2) und die Konstantstrom-Klemmschaltung (5) auf der Basis des Lichtquellen-Antriebsstroms steuert,
**dadurch gekennzeichnet, dass**:
die Steuereinheit (6) eine Modus-Schaltsteuereinheit (13) einschließt, die einen Modus in einen aus einem Abwärtsmodus, in dem der Abwärtsschalter (SW1) einem Schalten unterzogen wird und der Aufwärtsschalter (SW2) einen Aus-Zustand beibehält, einem leitenden Modus, in dem der Abwärtsschalter (SW1) einen Ein-Zustand beibehält und der Aufwärtsschalter (SW2) einen Aus-Zustand beibehält, und einem Aufwärtsmodus, in dem der Abwärtsschalter (SW1) einen Ein-Zustand beibehält und der Aufwärtsschalter (SW2) einem Schalten unterzogen wird, schaltet, wobei
ein Maximalwert einer Einschaltdauer des Abwärtsschalters (SW1) und ein Minimalwert einer Einschaltdauer des Aufwärtsschalters (SW2) in der Steuereinheit (6) voreingestellt sind,
die Konstantstrom-Klemmschaltung (5) einen Begrenzungsvorgang, der den Lichtquellen-Antriebsstrom auf einen konstanten Wert regelt, startet, wenn die Einschaltdauer des Abwärtsschalters (SW1) zu dem Maximalwert in dem Abwärtsmodus wird oder wenn die Einschaltdauer des Aufwärtsschalters (SW2) zu dem Minimalwert in dem Aufwärtsmodus wird, und
die Konstantstrom-Klemmschaltung (5) den Begrenzungsvorgang stoppt, wenn die Einschaltdauer des Abwärtsschalters (SW1) kleiner als der Maximalwert in dem Abwärtsmodus wird oder wenn die Einschaltdauer des Aufwärtsschalters (SW2) größer als der Minimalwert in dem Aufwärtsmodus wird.

2. Aufwärts/Abwärts-DC/DC-Wandler (1) nach Anspruch 1, **dadurch gekennzeichnet, dass**
wenn eine an die Konstantstrom-Klemmschaltung (5) angelegte Spannung höher als oder gleich wie ein vorbestimmter Schwellenwert wird, die Modus-Schaltsteuereinheit (13) den Modus in den leitenden Modus schaltet, wenn der Aufwärtsmodus eingestellt ist, und den Modus in den Abwärtsmodus schaltet, wenn der leitende Modus eingestellt ist, und
wenn der durch die Lichtquelle (40) fließende Lichtquellen-Antriebsstrom kleiner als ein vorbestimmter Schwellenwert wird, die Modus-Schaltsteuereinheit (13) den Modus in den leitenden Modus schaltet, wenn der Abwärtsmodus eingestellt ist, und den Modus in den Aufwärtsmodus schaltet, wenn der leitende Modus eingestellt ist.

3. Aufwärts/Abwärts-DC/DC-Wandler (1) nach Anspruch 1 oder 2, **dadurch gekennzeichnet, dass**
ein Dimmen der Lichtquelle (40) in Pulsweitenmodulation durchgeführt wird, um einen Schaltvorgang des Abwärtsschalters (SW1) und des Aufwärtsschalters (SW2) wiederholt durchzuführen und zu stoppen, und
der Betrieb der Konstantstrom-Klemmschaltung (5) gestoppt wird, um den Lichtquellen-Antriebsstrom zu unterbrechen, wenn der Abwärtsschalter (SW1) und der Aufwärtsschalter (SW2) gestoppt werden.

4. Aufwärts/Abwärts-DC/DC-Wandler (1) nach Anspruch 1, 2 oder 3, **dadurch gekennzeichnet, dass**
der Aufwärts/Abwärts-DC/DC-Wandler (1) in einer Fahrzeugleuchte installiert ist, eine Halbleiterlichtquelle als die Lichtquelle verwendet wird und der Lichtquellen-Antriebsstrom der Halbleiterlichtquelle (40) zugeführt wird.

## Revendications

1. Convertisseur CC-CC par élévation et abaissement (1) comprenant :
une unité d'abaissement (2) qui possède un commutateur d'abaissement (SW1) entrant une tension de courant continu provenant d'une alimentation en courant continu et une bobine d'arrêt (L) reliée au commutateur d'abaissement (SW1), et qui délivre en sortie une tension de sortie inférieure à la tension d'entrée vers une source de lumière (40) ;
une unité d'élévation (3) qui possède un commutateur d'élévation (SW2) relié au commutateur d'abaissement (SW1) par l'intermédiaire de la bobine d'arrêt (L), et qui délivre en sortie une tension de sortie supérieure à la tension d'entrée vers la source de lumière (40) ;
un circuit de calage à courant constant (5) qui limite un courant d'entraînement de source de lumière circulant à travers la source de lumière (40) à une valeur constante ; et
une unité de commande (6) qui commande le commutateur d'abaissement (SW1), le commutateur d'élévation (SW2) et le circuit de calage à courant constant (5) sur la base du courant d'entraînement de source de lumière,
**caractérisé en ce que** :
l'unité de commande (6) comporte une unité de commande de commutation de mode (13) qui commute un mode vers l'un quelconque parmi un mode d'abaissement dans lequel le commutateur d'abaissement (SW1) est soumis à une commutation et le commutateur d'élévation (SW2) maintient un état inactif, un mode conducteur dans lequel le commutateur d'abaissement (SW1) maintient un état actif et le commutateur d'élévation (SW2) maintient un état inactif et un mode d'élévation dans lequel le commutateur d'abaissement (SW1) maintient un état actif et le commutateur d'élévation (SW2) est soumis à une commutation, dans lequel
une valeur maximale d'un état actif du commutateur d'abaissement (SW1) et une valeur minimale d'un état actif du commutateur d'élévation (SW2) sont préétablies dans l'unité de commande (6),
le circuit de calage à courant constant (5) entre dans un fonctionnement de limitation qui commande le courant d'entraînement de source de lumière à une valeur constante lorsque l'état actif du commutateur d'abaissement (SW1) prend la valeur maximale dans le mode d'abaissement ou lorsque l'état actif du commutateur d'élévation (SW2) prend la valeur minimale dans le mode d'élévation, et
le circuit de calage à courant constant (5) arrête le fonctionnement de limitation lorsque l'état actif du commutateur d'abaissement (SW1) devient inférieur à la valeur maximale dans le mode d'abaissement ou lorsque l'état actif du commutateur d'élévation (SW2) devient supérieur à la valeur minimale dans le mode d'élévation.

2. Convertisseur CC-CC par élévation et abaissement (1) selon la revendication 1, **caractérisé en ce que**
lorsqu'une tension appliquée au circuit de calage à courant constant (5) devient supérieure ou égale à un seuil prédéterminé, l'unité de commande de commutation de mode (13) commute le mode vers le mode conducteur lorsque le mode d'élévation est établi et commute le mode vers le mode d'abaissement lorsque le mode conducteur est établi, et
lorsque le courant d'entraînement de source de lumière circulant à travers la source de lumière (40) devient inférieur à un seuil prédéterminé, l'unité de commande de commutation de mode (13) commute le mode vers le mode conducteur lorsque le mode d'abaissement est établi et commute le mode vers le mode d'élévation lorsque le mode conducteur est établi.

3. Convertisseur CC-CC par élévation et abaissement (1) selon la revendication 1 ou 2, **caractérisé en ce que**
la réduction d'intensité de la source de lumière (40) est effectuée en modulation d'impulsions en largeur pour effectuer et arrêter de manière répétée le fonctionnement de commutation du commutateur d'abaissement (SW1) et du commutateur d'élévation (SW2), et
le fonctionnement du circuit de calage à courant constant (5) est arrêté pour interrompre le courant d'entraînement de source de lumière lorsque le commutateur d'abaissement (SW1) et le commutateur d'élévation (SW2) sont arrêtés.

4. Convertisseur CC-CC par élévation et abaissement (1) selon les revendications 1, 2 ou 3, **caractérisé en ce que**
le convertisseur CC-CC par élévation et abaissement (1) est installé dans un feu automobile, une source de lumière à semi-conducteur est utilisée comme source de lumière, et le courant d'entraînement de source de lumière alimente la source de lumière à semi-conducteur (40).
